# EUROPEAN PATENT APPLICATION

(11) **EP 1 411 470 A2**
(43) Date of publication of application: **21.04.2004**
(21) Application number: 03078105.8
(22) Date of filing: 30.09.2003
(51) Int. Cl.: G06T 5/00

(54) **Determining a sharpening filter for a digital image**

(30) Priority: 19.10.2002 GB 0224358
(71) Applicant: EASTMAN KODAK COMPANY, Rochester, New York 14650 (US)
(72) Inventor: Murphy, Nicholas P. c/o Kodak Limited, Harrow Middlesex HA1 4TY (GB)
(74) Representative: Barker, Brenda

(57) **Abstract**

The invention provides a method of image processing, comprising the steps of comparing in a first comparison an image edge profile representative of the sharpness of an image and an aim edge profile representative of a desired sharpness of said image; and, generating a sharpness filter in dependence on said first comparison. The invention provides a simple and robust method for customisation of image sharpness to a user's preference.

## Description

### FIELD OF THE INVENTION

The present invention relates to image processing. In particular the invention relates to a method of determining a sharpness filter for a digital image. The invention also relates to a processor capable of sharpening a digital image using the determined sharpness filter.

### BACKGROUND OF THE INVENTION

The sharpness of a digital image may be determined by, amongst other factors, the capture device with which it was captured. Once captured, the quality of an image, as perceived by a viewer, can be enhanced by the appropriate use of a sharpening filter.

However, the default use of sharpening e.g. within a printer, to compensate for more than the printer modulation transfer function (MTF) can lead to over-sharpened output images, particularly if the source has been pre-sharpened. Conversely, in some cases if insufficient sharpening is used, the MTF of a printer blurs images produced by the printer, which is undesirable. In the case of images captured with a digital camera, in-built algorithms within the camera often function to pre-sharpen the captured image, leading to the output of over-sharpened images from the printer. This is undesirable since the over-sharpening of images can distort true image data and lead to the introduction of artefacts into the image.

A method of image processing is required to enable a sharpness filter to be determined such that optimum sharpness of an image can be achieved

A method is also required that enables a sharpness filter to be determined capable of normalising digital source images to a desired, or aim, common sharpness level.

### SUMMARY OF THE INVENTION

According to a first aspect of the present invention, there is provided a method of image processing. The method comprises the steps of comparing in a first comparison an image edge profile representative of the sharpness of an image and an aim edge profile representative of a desired sharpness of the image and, generating a sharpness filter in dependence on the first comparison. After the sharpness filter has been generated, the method preferably further comprises the step of applying the sharpness filter to the image to obtain a sharpened image.

Preferably, the method further comprises the step of generating an edge profile representative of the sharpness of the sharpened image and modifying the sharpness filter in dependence on a subsequent comparison between the generated edge profile representative of the sharpness of the sharpened image and the aim edge profile.

Preferably, the method then further comprises repetition of the step of modification of the filter until the filter is substantially unity at all frequencies. In other words, the method is repeated iteratively, on each iteration a subsequently filtered image being used to generate the image edge profile, representative of the sharpness of the image.

In one example, the first comparison comprises the step of transforming the image edge profile representative of the sharpness of the image and the aim edge profile representative of the desired sharpness of the image into frequency space e.g. using a Fast Fourier Transform FFT. Thus, frequency spectra representative of the profiles are obtained. This is followed by the steps of fitting envelopes to the obtained spectra and dividing the spectrum corresponding to the image edge profile into the spectrum corresponding to the desired edge profile to generate a target spectrum.

In one example, the aim edge profile is a viewer's preferred edge function shape. Preferably, the aim edge profile is also modified to compensate for the MTF function of an output device from which an output format of the image will be produced. The adaptation may be any suitable adaptation in dependence on the MTF of the output device but may typically involve the addition of a high frequency component to the aim edge function.

Preferably, the invention comprises the step of modifying the target spectrum to control noise in the sharpened image. The modification may comprise clipping the gain of the target spectrum at a maximum value, thereby limiting noise build-up in the sharpened image. After the target spectrum has been clipped, the gain is preferably reduced to a target value, say within a predetermined number of frequency bins.

The target spectrum may be modified with reference to a noise estimation method to control noise in the sharpened image.

According to a second aspect of the present invention there is provided a processor adapted to compare, in a first comparison, an image edge profile representative of the sharpness of an image and an aim edge profile representative of a desired sharpness of said image and generate a sharpness filter in dependence on the first comparison.

According to a third aspect of the present invention there is provided a computer program product optionally stored on a computer readable medium e.g. CD-ROM, floppy disc etc., which when run on a computer causes the computer to execute the steps of the first aspect of the present invention.

### ADVANTAGEOUS EFFECT OF THE INVENTION

The invention provides a method by which a sharpness filter is generated for an image in dependence on a comparison between an image-obtained edge profile, representative of the sharpness of the image and an aim edge profile representative of a desired sharpness of the image. The method is a simple and robust method of obtaining a sharpness filter for an image, capable of optimising the sharpness for an image. Furthermore, if the same aim edge profile is used in the comparison in method of the present invention on a number of different digital source images, a sharpness filter can be determined that is capable of normalising the digital source images to a common sharpness level.

In one example, an iterative process is used whereby the filtered image from a first cycle of the method is used to generate a subsequent filter to further filter the image and bring it to an optimised sharpness level. It is found that within two cycles of iteration the image is close to optimised sharpness.

In one example the aim edge profile representative of the desired smoothness of the image is adapted such that a corresponding adaptation is brought about in the generated filter. This can be used to compensate for, for example, an MTF of a printer used to print an output format of the image.

### BRIEF DESCRIPTION OF THE DRAWINGS

Examples of the present invention will now be described in detail with reference to the accompanying drawings, in which:
Figure 1 is a flow diagram showing the steps in the method of the present invention;
Figure 2 is a graph showing an aim edge profile and a measured edge profile used in the method of the present invention;
Figures 3A and 3B are graphs showing the transforms of the graphs in Figure 1 into frequency space; and,
Figures 4A and 4B are graphs showing the result of a division of the graph in Figure 3A into that of Figure 3B, used in the method of the present invention.

### DETAILED DESCRIPTION OF THE INVENTION

The present invention relates to a method of sharpening an image by a calculated amount such that it is neither over- nor under-sharpened.

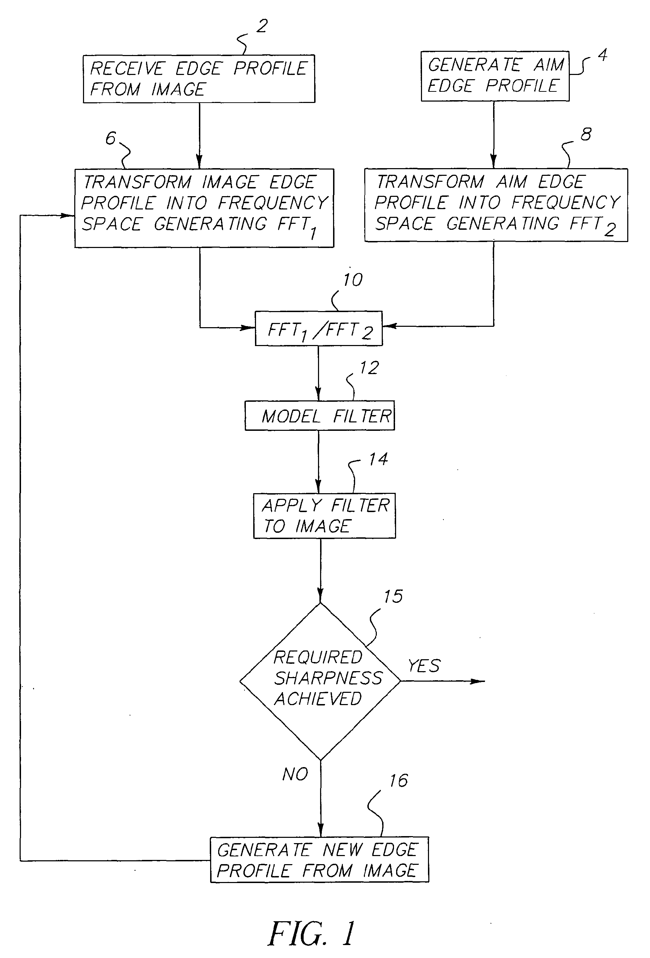

Figure 1 is a flow diagram showing the steps in the method of the present invention. Initially at step 2, an edge profile is received from a digital image to be processed, the edge profile being representative of the sharpness of the image. The digital image may be obtained from a digital camera or from the output of the digital scanning of an analogue image. The edge profile may be generated using any suitable method. One example of a suitable method is that described in our co-pending UK patent application entitled "Image Processing" having the same filing date as the present application and having our internal reference number 84862. At step 4, an aim edge profile is generated. The aim edge profile is representative of the desired sharpness of the image. This may be a viewer's edge shape preference, an ideal square function or alternatively, as will be explained below it might include some weighting to account for printer MTF.

At steps 6 and 8 respectively, the image edge profile and the aim edge profile are transformed into frequency space to obtain corresponding real valued spectra FFT₂ and FFT₁. To eliminate nulls in the spectra the envelopes of the magnitude functions of the spectra are found and then at step 10 the envelope from the measured spectrum (FFT₂) is divided into the envelope from the aim spectrum (FFT₁). Prior to the division the DC component of the spectra are matched by scaling to ensue that the brightness of the image will not be changed by the filtering, to be described below. As a result of the division, a target spectrum is obtained, which represents the sharpness filter that would have to be applied to the original image to obtain the desired sharpness throughout. If the target spectrum rises above a maximum defined value it is ramped down to a suitable level e.g. unity, to avoid undesirable boosting of high frequency noise. The ramping down to unity is achieved within a predetermined number of frequency bins e.g. 30.

It is also desirable to modify the target spectrum with reference to a noise estimation method such that noise build-up across the entire frequency spectrum can be controlled. For example, if the noise estimation method indicates that noise is present across a particular frequency band the maximum gain of the target spectrum can be correspondingly reduced or clipped. This serves to reduce and allow more general control of noise in the sharpened image. Once the maximum gain of the target spectrum has been clipped, it may be reduced to a desired target value by e.g. ramping down to a suitable level within a predetermined number of frequency bins.

Once the resultant spectrum is obtained in step 10 by a comparison e.g. a division of FFT₁ into FFT₂, at step 12 a desired filter is obtained by any suitable method of filter design (modelling). Any suitable filter design method may be used, examples including (amongst others) frequency sampling, least squares and weighted least squares. The order of the filter may be increased until a maximum allowable error is achieved. This can be measured using a metric such as the mean squared error criterion. Once the desired filter has been obtained, at step 14 this is applied to the original image. At step 15 it is determined whether or not the sharpened image is sufficiently sharp i.e. whether or not a required or desired sharpness of the image has been achieved. If it has, the processing is complete. If it has not, then the method proceeds to step 16, at which from the filtered (sharpened) image, an edge profile representative of the edge sharpness of the filtered image is generated. This newly generated edge profile is input to step 6 and the process repeats iteratively until a desired sharpness of the image is obtained.

As described above, the determination as to whether or not the required sharpness of the image has been achieved can be made in step 15 after a filter modelled in step 12 has been applied to the image. As an alternative, this determination can be made based on the response of the modelled filter. If the filter is substantially flat and within a predetermined error range of unity it may be deduced that the image from which the filter was modelled (see description in relation to steps 6, 8 and 10), was already at the required sharpness.

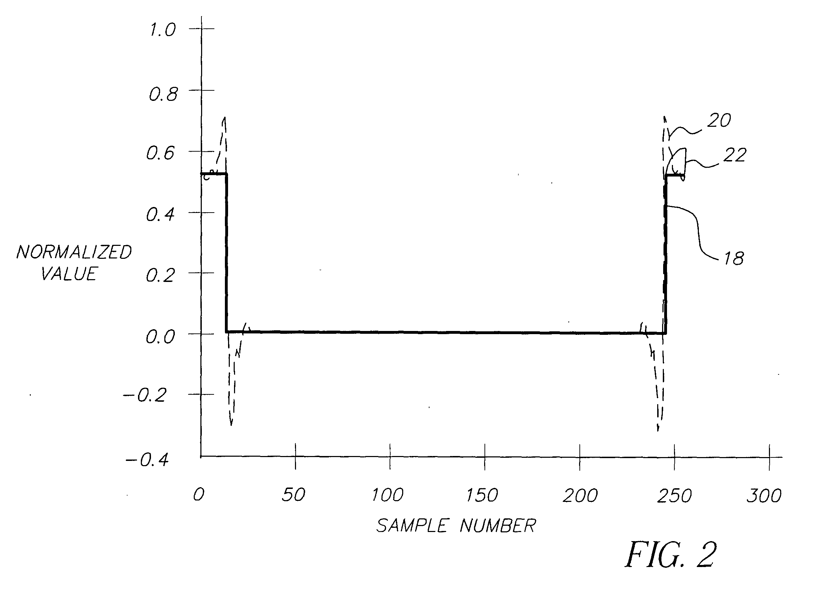

Figure 2 is a graph showing an aim edge profile 18 and a measured edge profile 20 (image edge profile) obtained from the image to be processed, used in the method of the present invention. The aim edge profile 18 in this example is an ideal square function. In many cases it will be desirable to adapt the form of the aim edge profile to account for variations in printer or output MTF. Many printers have an MTF that roughly corresponds to a low pass filter. This may be due to the physical limitation of interaction between ink supplied by the printer and the medium onto which the image is printed. Therefore, the present invention enables this problem to be addressed by providing a simple and robust method to compensate for this.

For example, by adding a high frequency component 22 shown in dotted line in Figure 2, to the aim edge profile, when the iteration explained above with reference to Figure 1 is cycled through, the sharpening algorithm will automatically compensate for the printer MTF by effectively adding a high frequency boost to the aim edge profile. In other words, the sharpness filter that is eventually applied to the original image to obtain the aim sharpness throughout has a factor incorporated into it by the original adaptation to the aim edge profile. The aim edge profile is adjusted to compensate for the printer MTF.

It will be appreciated that the measured edge profile 20 has been mirrored to provide an approximate symmetric function which ensures that when an FFT is performed on it, a real spectrum is generated.

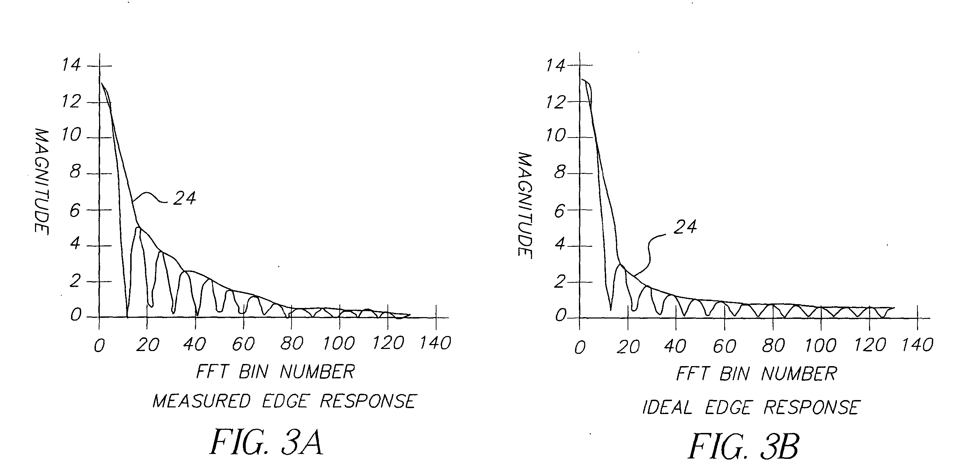

Figures 3A and 3B are graphs showing the transforms of the graphs in Figure 1 into frequency space. Figure 3A shows the spectrum obtained from the image edge profile generated from the image and Figure 3B shows the spectrum obtained from the ideal, or aim, edge profile 18. As explained above an envelope 24 is interpolated for each of the frequency spectra to enable division of one into the other. Additionally the values of magnitude are scaled such that the FFT value at the DC coefficient are set to a common value, so that the brightness of the processed image is not changed.

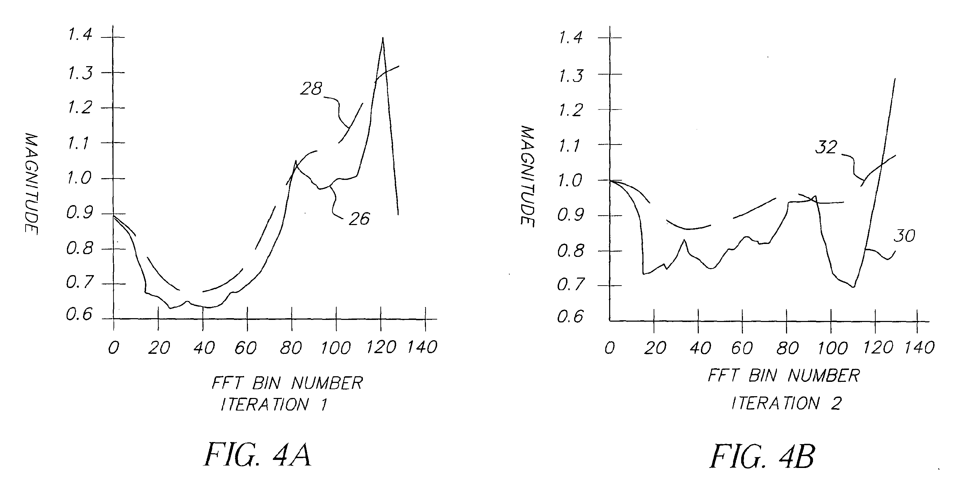

Figures 4A is a graph showing a sharpness filter calculated in dependence on the graphs in Figures 3A and 3B. In fact, the sharpness filter is the result of a division of the graph in Figure 3A into that of Figure 3B. Figure 4B is a graph showing a subsequent iteration of the method of the present invention, showing a modified sharpness filter. In Figure 4A, graph 26 representing the actual result of the division of the graph in Figure 3A into that of Figure 3B. This function is used as the design template for a filter design program to enable the graph 28 to be obtained. The graph 28 represents the sharpness filter that needs to be applied to the original image to obtain a sharpness throughout the image equivalent to the aim edge profile.

Once the sharpness filter has been determined it is applied to the source image. Once again an edge profile is generated from the now filtered image and the edge profile is mirrored and transformed into frequency space (a second operation of step 6 in Figure 1). The remaining steps (numbered 10 to 16 in Figure 1) are repeated iteratively on each cycle the sharpness filter being modified. It will be understood that on the first cycle of the method the determined sharpness filter is applied to the source image. On subsequent cycles through the method, the modified sharpness filter is applied to the most recently sharpened version of the image. As the iteration repeats the sharpness filter approaches unity throughout. On each cycle through the method a comparison in step 10 is performed between the aim edge profile and the image edge profile obtained from the most recently sharpened version of the image.

Figure 4B shows the result 30 of the division of step 10 of Figure 1 after 2 cycles of the iteration. Again, a sharpness filter 32 is modelled for application to the image. It can be seen that after only two cycles of the iteration the filter 32 is close to unity throughout. Once it has reached unity this shows that the sharpness of the image is the same as the desired image sharpness and hence the processing is complete.

## Claims

1. A method of image processing, comprising the steps of:
comparing in a first comparison an image edge profile representative of the sharpness of an image and an aim edge profile representative of a desired sharpness of said image; and,
generating a sharpness filter in dependence on said first comparison.

2. A method according to claim 1, further comprising the step of applying said sharpness filter to the image to obtain a sharpened image.

3. A method according to claim 2, further comprising the step of generating an edge profile representative of the sharpness of the sharpened image and modifying the sharpness filter in dependence on a subsequent comparison between said generated edge profile representative of the sharpness of the sharpened image and the aim edge profile.

4. A method according to claim 3, comprising iteratively repeating the steps of generating an edge profile representative of the sharpness of the sharpened image and modifying said sharpness filter in dependence on subsequent comparisons between a most recently generated edge profile representative of the sharpness of the sharpened image and the aim edge profile until the sharpness filter is substantially unity at all frequencies.

5. A method according to claim 2, comprising the steps of:
generating an edge profile representative of the sharpness of the sharpened image;
comparing said edge profile representative of the sharpness of the sharpened image with the aim edge profile to determine whether or not the sharpened image is sufficiently sharp.

6. A method according to claim 2, in which said first comparison comprises the steps of:
transforming the image edge profile representative of the sharpness of the image and the aim edge profile representative of the desired sharpness of said image into frequency space to obtain frequency spectra representative of said profiles;
fitting envelopes to the obtained spectra; and,
dividing the spectrum corresponding to the image edge profile into the spectrum corresponding to the aim edge profile to generate a target spectrum.

7. A method according to claim 6, in which the step of generating a sharpness filter in dependence on said comparison comprises the step of inputting the target spectrum to a filter design method.

8. A method according to claim 7, in which the filter design method is selected from the group consisting of frequency sampling, least squares and weighted least squares.

9. A method according to claim 1, in which the aim edge profile is a viewer's edge shape preference.

10. A method according to claim 1, in which the aim edge profile is a modified viewer's edge shape preference, adapted to compensate for the MTF function of an output device from which an output format of the image will be produced.

11. A method according to claim 6, further comprising the step of modifying the target spectrum to control noise in the sharpened image.

12. A method according to claim 11, in which the modification comprises clipping the gain of the target spectrum at a maximum value, thereby limiting noise build-up in the sharpened image.

13. A method according to claim 12, in which after the target spectrum has been clipped, the gain is reduced to a target value.

14. A method according to claim 11, in which the target spectrum is modified with reference to a noise estimation method to control noise in the sharpened image.

15. A method according to claim 10, in which the adaptation of the aim edge profile comprises adding a high frequency component to the viewer's edge shape preference.

16. A method according to claim 6, comprising scaling the frequency spectra representative of each of said image edge profile and the aim edge profile.

17. A processor adapted to compare, in a first comparison, an image edge profile representative of the sharpness of an image and an aim edge profile representative of a desired sharpness of said image; and, generating a sharpness filter in dependence on said first comparison.

18. A computer program product, which when run on a computer causes said computer to execute the steps of claim 1.
